Europäisches Patentamt

European Patent Office

Office européen des brevets

(11) Veröffentlichungsnummer: **0 118 060 B2**

(12) # NEUE EUROPÄISCHE PATENTSCHRIFT

(45) Veröffentlichungstag der neuen Patentschrift:
**11.12.91 Patentblatt 91/50**

(21) Anmeldenummer: **84101511.8**

(22) Anmeldetag: **14.02.84**

(51) Int. Cl.$^5$: **B65D 65/40, B32B 27/08, B29D 9/00**

(30) Priorität: **23.02.83 DE 3306189**

(43) Veröffentlichungstag der Anmeldung:
**12.09.84 Patentblatt 84/37**

(45) Bekanntmachung des Hinweises auf die
Patenterteilung:
**19.08.87 Patentblatt 87/34**

(45) Bekanntmachung des Hinweises auf die
Entscheidung über den Einspruch:
**11.12.91 Patentblatt 91/50**

(84) Benannte Vertragsstaaten:
**BE DE FR GB IT NL**

(56) Entgegenhaltungen:
**EP-A- 0 062 815**
**EP-A- 0 063 006**
**GB-A- 1 567 189**
**GB-A- 2 025 839**

(56) Entgegenhaltungen:
**JP-A- 588 644**
**US-A- 4 212 956**
**W.R. Park "Plastic Film Technology", 1969,
van Nostrand Reinhold Company, New York,
Pp. 45, 69**
**Modern Packaging, August 1961, O'Donnell
and Selldorf "Bioriented Polypropylene Film",
pp. 133-136, 138, 203**
**K. Ikari "Oxygen Barrier Properties and Applications of Kuraray Eval Resins", November
1982, COEX '82, Princeton, New Jersey**

(73) Patentinhaber: **HOECHST
AKTIENGESELLSCHAFT
Postfach 80 03 20
W-6230 Frankfurt am Main 80 (DE)**

(72) Erfinder: **Dallmann, Hermann, Dr.
Erbsenacker 29
W-6200 Wiesbaden (DE)**
Erfinder: **Palmen, Hans Josef, Dr.
Fliederstrasse 22
W-6229 Walluf 1 (DE)**

(54) **Mehrschichtige Folie mit einer Gas- und Aroma-Sperrschicht, Verfahren zu ihrer Herstellung und ihre Verwendung.**

EP 0 118 060 B2

**Beschreibung**

Die Erfindung bezieht sich auf eine mehrschichtige, vorzugsweise siegelfähige Folie von der im Oberbegriff des Anspruches 1 genannten Art, auf ein Verfahren zu ihrer Herstellung und ihre Verwendung.

Eine mehrschichtige Folie mit einer Sperrschicht aus einem Material, wie es in der vorliegenden Anmeldung verwendet wird, ist in der DE-A-26 44 209 (= GB-A-1 567 189) beschrieben. Die bekannte Folie zeigt einen mehrschichtigen Aufbau aus einer Polypropylenbasisfolie, einer auf diese Folie angeordneten Zwischenschicht aus einem modifizierten polyolefin und einer Sperrschicht zur Verringerung der Sauerstoffdurchlässigkeit, wobei auf letzterer eine Heißsiegelschicht aufgebracht sein kann. Die Folie wird nach dieser Druckschritt in der Weise hergestellt, indem man auf eine zunächst produzierte quer- oder längsaxial orientierte Basisfolie aus Polypropylen eine aus den Polymeren der Zwischenschicht und der Sperrschicht bestehende, zweischichtige Schmelze aufbringt und die resultierende Verbundfolie durch Strecken in Querrichtung orientiert. Die heißsiegelfähige Schicht wird erst nachträglich, d. h. nach Herstellung dieser dreischichtigen Verbundfolie, in einem weiteren Schritt aufgebracht und ist somit im wesentlichen nicht orientiert. Damit ergeben sich für die Schichten aus Basisfolie, Zwischenschicht/Sperrschicht sowie Heißsiegelschicht verschiedene Werte für ihre Orientierung.

Es hat sich nun gezeigt, daß diese Folie den zwischenzeitlich gestiegenen Anforderungen an die Gasbarriereeigenschaften, Wasserfestigkeit und anderen physikalischen Eigenschaften häufig nicht mehr gewachsen ist.

Zur Verbesserung der Gleiteigenschaften der aus der DE-A-26 44 209 bekannten Folie wird in der EP-A-0 062 815 angegeben, die äußere Siegelschicht durch spezielle Zusätze zu modifizieren. Eine Verbesserung der Gasbarriereeigenschaften und Wasserfestigkeit der Folie wird mit dieser Maßnahme aber nicht erreicht. Außerdem zeigen die einzelnen Schichten auch in diesem Fall keine, unter gleichen Bedingungen erzielte Orientierung.

Andererseits lassen sich die bekannten siegelfähigen mehrschichtigen Folien mit einer Barriereschicht auf Basis von Ethylen-Vinylalkohol-Copolymeren auch nicht erfolgreich durch gleichzeitige Coextrusion aller Schichten herstellen, um eine unter gleichen Streckbedingungen erzeugte Orientierung aller Schichten zu erreichen.

So wird gemäß der GB-A-2 025 839 gelehrt, zur Erzeugung einer sauerstoffdichten Verpackungsfolie lediglich eine Sauerstoffbarriereschicht und zwei diese umgebende Außenschichten miteinander simultan zu verstrecken, wobei die Streckungen in Längs- und in Querrichtung übereinstimmen. Als Sauerstoffbarriereschicht wird laut Beispiel 3 dieser Schritt eine 10 µm dicke, aus einem vollständig hydratisierten Ethylen-Vinyl-Acetat-Copolymeren bestehende, 6,18 % Wasser enthaltende Schicht verwendet. Die Außenschichten bestehen aus einem Polyethylen niedriger Dichte. Die resultierende Dreischichtverbundfolie wird simultan sowohl in Längs- als auch in Querrichtung um den Faktor 3 jeweils bei einer Temperatur von 90 °C gestreckt. Aus dieser Schritt geht nicht hervor, daß die Sauerstoffbarriereeigenschaften einzelner Schichten durch spezielle Streckbedingungen der resultierenden Verbundfolie beeinflußt werden können.

Es ist deshalb Aufgabe der vorliegenden Erfindung, eine Folie von der im Oberbegriff des Anspruches 1 genannten Art hinsichtlich ihrer physikalischen Eigenschaften, insbesondere bezüglich der Barriereeigenschaften gegenüber Luftsauerstoff und Aromen zu verbessern.

Ferner soll bei Anwendung von äußeren Siegelschichten der Siegelbereich erweitert werden.

Diese Aufgabe wird gelöst durch eine Folie der genannten Art mit den im kennzeichnenden Teil des Patentanspruches 1 angeführten Merkmalen, durch das im Patentanspruch 21 beschriebene Verfahren und durch die Verwendung der Folie nach Anspruch 27. Die Unteransprüche geben vorteilhafte Ausführungsformen der Folie bzw. des Verfahrens an.

Die mehrschichtige Folie der Erfindung besitzt eine Gas- und Aroma-Sperrschicht D aus dem genannten Copolymerisat und beidseitig auf dieser Schicht vorhandene zusätzliche Schichten, wobei wenigstens eine der beiden äußeren Oberflächen der Folie durch eine siegelfähige Außenschicht A gebildet wird. Unmittelbar auf den beiden Oberflächen der Sperrschicht D befindet sich jeweils eine Schicht C, die entweder aus einer Polymermischung besteht, welche ein haftvermittelndes Polymer umfaßt, oder die eine haftvermittelnde Schicht darstellt und somit im wesentlichen ausschließlich aus haftvermittelnden Polymeren besteht.

Zunächst sollen nur die Schichten beschrieben werden, die sich auf der der siegelfähigen Außenschicht A zugewandten Seite der Sperrschicht D befinden, welche als erste Oberfläche von D bezeichnet werden soll. Zwischen der siegelfähigen Außenschicht A und der ersten Oberfläche der Sperrschicht D ist eine erste Schicht B angeordnet, die dicker ist als die Schicht(en) A und D und die Funktion einer Basis- oder Trägerfolie hat. Somit ist die Dicke der Schicht B, welche bevorzugt 10 bis 20 µm beträgt, im wesentlichen für die mechanischen Eigenschaften und Dimensionsbeständigkeit der Folie verantwortlich, während die jeweilige Dicke der Schicht(en) A sowie der Schichten C und D vor allem aus Kostengründen vergleichsweise gering ist und zweckmäßigerweise im Bereich von 1 bis 3 µm liegt. Zwischen der ersten Schicht B und der Sperrschicht D ist die erste haftvermittelnde Schicht C vorhanden.

In einer Alternative bilden diese Schichten B und C unter Addition ihrer jeweiligen Dicke eine gemeinsame homogene Schicht, die sowohl Polymere der Schicht B als auch Polymere der Schicht C enthält.

In einer anderen Ausführungsform bestehen die Schicht A und die erste Schicht B aus dem gleichen Polymergemisch und bilden unter Addition ihrer Dicke eine einzige Schicht. Hierbei zeigt auch diese Schicht B heißsiegelfähige Eigenschaften. Das Polymergemisch umfaßt in diesem Fall das heißsiegelfähige Polymermaterial der Schicht A und die Polymeren der Schicht B.

In einer weiteren Ausführungsform ist auf der ersten Oberfläche der Sperrschicht D nur eine einzige Schicht vorhanden, die sowohl heißsiegelfähig ist als auch ausreichend fest mit der Sperrschicht D verankert ist. Dazu wird eine Polymermischung verwendet, die haftvermittelndes Material der Schicht C und heißsiegelfähiges Material der Schicht A und gegebenenfalls auch die Polymeren der Schicht B umfaßt. Die Schichtdicke der einzigen Schicht entspricht der Gesamtdicke des alternativen dreischichtigen Aufbaues der Schichten A, B und C.

Die auf der gegenüberliegenden Oberfläche des Sperrschicht D, die als zweite Oberfläche von D bezeichnet werden soll, vorhandenen Schichten bestehen beispielsweise aus jeweils einer zweiten Schicht A, B und C und zeigen Schichtstrukturen, wir sie unter den bereits gennanten Alternativen für die Schichten auf der ersten Oberfläche der Sperrschicht D zu finden sind. Somit sind auch auf der zweiten Oberfläche von D Schichtkombinationen aus A, B und C, aus A und B (B enthält haftvermittelndes Material) sowie aus B (B enthält vorzugsweise siegelfähiges Material) und C möglich.

Für bestimmte Anwendungsmöglichkeiten ist es aber vorzusiehen, auf diese zweite siegelfähige Schicht A und eventuell auch noch auf diese zweite Schicht B zu verzichten. In diesem Fall kann eine siegelbare Oberfläche auf dieser Seite der Folie erst zu einem späteren Zeitpunkt, d. h. nach der Extrusion, erzeugt werden, beispielsweise durch partielles oder vollflächiges Aufdrucken einer siegelbaren Schicht auf Basis von rezepturierten Polyolefinen, die, vorzugsweise bei Temperatur unter 100 °C, gegen sich selbst, aber auch gegen andere siegelfähige Schichten auf Basis von Polyolefinen siegelbar sind. Diese aufgedruckte siegelbare Schicht kann sich auf der jeweils zweiten Schicht C oder B befinden oder nachträglich auf einer siegelfähigen Außenschicht A aufgebracht worden sein, falls sich z. B. bei der Verwendung der Folie herausstellen sollte, daß die Schicht A für den speziellen Anwendungszweck nicht besonders vorteilhaft ist. Als bevorzugte Hauptkomponente für die aufgedruckte siegelbare Schicht ist ein Ethylen-Vinylacetat-Copolymeres geeignet, welches die Einhaltung relativ niedriger Siegeltemperaturen, d. h. unter 100 °C, gestattet, oder man verwendet als zusätzliche Komponente oder als andere Hauptkomponente bereits bei noch niedrigen Temperaturen klebrige Verbindungen, wie Naturkautschuk, die eine Siegelfähigkeit der aufgedruckten Schicht gegen Schichten aus dem gleichen Material schon bei der bloßen Einwirkung von Druck ergeben. Solche Klebstoffe sind beispielsweise als Haftklebstoffe bekannt.

Die Sperrschicht D dient als Gas-, insbesondere Sauerstoff- oder Aroma-Barriere und ist auf der Basis von einem Ethylen-Vinylalkohol-Copolymeren mit einem Ethylengehalt von 15 bis 60 Mol-% und einem Verseifungsgrad von mindestens 90 Mol-%, vorzugsweise größer als 96 Mol-%, insbesondere etwa 99 Mol-%, aufgebaut. Zu diesem Copolymer gehören z. B. Ethylen-Propylen-Vinylalkohol-Copolymere sowie Umsetzungsprodukte von Ethylen-Vinylalkohol-Copolymeren mit niederen Aldehyden oder Ketonen wie sie u. a. in der DE-A-29 31 035 oder der US-A-42 12 956 beschrieben sind.

Die Ethylen-Vinylalkohol-Copolymer können bei der Extrusion Wasser enthalten, vorzugsweise in einer Menge von 1 bis 10 Gew.-%. Zu Erzielung eines hohen Orientierungseffektes und damit einer guten Gasbarriere ist es jedoch vorzuziehen, wenn der Wassergehalt kleiner als 5 % ist, vorzugsweise unter 3,5 %, insbesondere sogar unter 2 Gew.-% liegt oder gegen Null geht. Diese Werte sind insbesondere während der Herstellung der Folie unmittelbar vor Beginn des Streckprozesses einzuhalten.

Die Sperrschicht D auf Basis von Ethylen-Vinylalkohol-Copolymeren enthält zur Verbesserung ihrer Streckbarkeit d. h. zur Reduzierung der Kristallinität monomere, oligomere oder polymere Substanzen. Die jeweils zugesetzte Menge richtet sich nach der Verträglichkeit, d. h. der Einarbeitbarkeit und Mischbarkeit mit der Hauptkomponente sowie dem Einfluß auf die Sauerstoffbarriere.

Beispiele für derartige Produkte sind hydroxyl- und carbonylgruppenhaltige Substanzen wie z. B. Trimethylolpropan. Neopentylglykol und Polyethylenglykole sowie insbesondere Substanzen, die ihrerseits bereits Barriereeingenschaften haben, wie z. B. Polyvinylalkohole oder Polyamide, wobei Mischungen aus Ethylen-Vinylalkohol-Copolymeren und 10 bis 50 Gew.-% Polyvinylalkohol mit einem Hydrolysegrad von größer als 80, insbesondere größer/gleich 88 Mol-%, und einer Viskosität von $0,4 \cdot 10^{-2}$ bis $4 \cdot 10^{-2}$, insbesondere $0,4 \cdot 10^{-2}$ bis $1 \cdot 10^{-2}$ Pa · s, vorteilhaft sind.

Die Polyamide sind mit den Ethylen-Vinylalkohol-Copolymeren über den gesamten Mischungsbereich verträglich und deshalb gut einarbeitbar. Derartige Mischungen (Blends) werden bereits in der EP-A-0 063 006 beschrieben. Die daraus hergestellten Folien sind allerdings nicht orientiert.

Von den verschiedenen zur Verfügung stehenden Polyamiden eignen sich besonders die 6,12- und 6,6-Copolyamide mit einem Erweichungspunkt von kleiner als 204 °C. Vorzugsweise werden 10 bis 60 Gew.-%, bevorzugt 10 bis 20 Gew.-%, eines Polyamids oder Copolyamids zugesetzt.

Das Mischungsverhältnis wird so gewählt, daß die Folie bei den gewählten Streckparametern leicht biaxial streckbar ist und die Gasbarriere nicht oder nur unbedeutend beeinträchtig wird.

Aus der Granulatmischung der Polymeren können mittels bekannter Vorrichtungen zunächst Stranggranulate hergestellt werden. Vorzugsweise werden die Granulatmischungen direkt, eventuell unter Verwendung einer Schnecke mit besonders guter Homogenisierungswirkung, d. h. einer Schnecke mit einem Scherteil, verarbeitet.

Die Sperrschicht D auf Basis von Ethylen-Vinylalkohol-Copolymeren kann weitere, die Haftung zu den angrenzenden Schichten fördernde Zusätze in Form von monomeren, oligomeren oder polymeren Substanzen enthalten. Beispiele hierfür sind durch Pfropfung modifizierte Polyolefine, Ethylen-Acrylsäure-Copolymere, Ionomere und Olefin-Copolymere.

Die Folie kann anstelle von nur einer auch mehrere orientierte Sperrschichten enthalten, wie es in Anspruch 20 angegeben ist.

Die Haftvermittlerschichten C bestehen vorteilhaft aus einem durch Pfropfung modifizierten Olefin-Homo- oder Copolymerisat, einem partiell verseiften Ethylen-Vinylalkohol-Copolymer mit einem niedrigen Verseifungsgrad oder Mischungen derselben mit anderen Polyolefinen. Besonders bevorzugt sind durch Pfropfung mit Carbonsäuren bzw. deren Anhydriden modifizierte Polypropylen-Homo- oder Copolymerisate.

Das Polymere der Schicht B besteht aus einem Propylen-Homo- oder Mischpolymerisat mit einem Schmelzpunkt von 140 °C oder höher, vorzugsweise von 150 °C und höher. Beispiele für das Polymere der Schicht B sind isotaktisches Polypropylen mit einen heptanlöslichen Anteil von 15 Gew.-% und weniger, Copolymere von Ethylen mit Propylen mit einem Ethylengehalt bis zu 15 Gew.-% sowie Copolymere von Propylen mit Buten, Penten, Hexen, Hepten, Octen und/oder anderen Olefinen. Es können auch Mischungen der gennanten Copolymer verwendet werden. Der Schmelzflußindex (MFI) des Polypropylenpolymeren liegt zweckmäßigerweise in einem Bereich von 0,5 g/10 min bis 8 g/10 min bei 230 °C und 2,14 bar (DIN 53735). Das Polypropylenpolymere kann Zusatzmittel wie Stabilisatoren, Pigmente sowie niedrigmolekulare verträgliche Harze oder Polymere enthalten.

Von den Pigmenten werden solche bevorzugt, die der Folie einen perlmuttartigen Glanz verleihen. Beispiele für derartige Pigmente sind Titandioxid, Calciumcarbonat oder Siliciumdioxid. Die Teilchengröße liegt im Bereich von 0,2 bis 20 μm, die zugesetzte Menge in der Größenordnung von 1 bis 25 Gew.-%. Beispiele für niedrigmolekulare verträgliche Harze sind Petroleumharze, Terpenharze, Erdölharze, die bei der Crackung von Naphtha oder Gasöl anfallen. Die Harze können hydriert und/oder durch Einführung spezieller Monomerer vor der Polymerisation modifiziert sein.

Die Einarbeitung der Harze zur Herstellung der Materialmischungen für die Schicht B erfolgt mittels der bekannten Methoden. Die Höhe des Zusatzes richtet sich nach dem Einfluß auf die optischen Eigenschaften und die Streckbarkeit. Mehr als 20 Gew.-% bezogen auf das Propylenpolymere sind aus verfahrenstechnischen Gründen beispielsweise bei niedrigmolekularen Harzen wie den Terpenharzen nicht erforderlich.

Die Folie ist vorzugsweise siegelfähig, wobei beidseitig siegelfähige Folien Siegelschichten unterschiedlicher Stärke und Zusammensetzung aufweisen können.

Das Siegelschichtpolymer der Schicht A besteht vorteilhaft aus einem Homo- oder Copolymeren eines Olefins, einem Ionomeren, Mischungen derselben oder Mischungen verschiedener Olefine und umfaßt gegebenenfalls noch andere Polymere. Vorzugsweise besteht die siegelfähige Außenschicht A aus einem Ethylen-Homopolymerisat niedriger oder hoher Dichte oder einem Ethylen-Copolymerisat. Besonders bevorzugt sind Ethylen-Propylen-Copolymerisate und Ethylen-Propylen-Butylen-Terpolymere, wobei der Ethylengehalt dieser Polymeren vorzugsweise im Bereich von 0,1 bis 15 Gew.-% und der Butylengehalt im Bereich von 1 bis 20 Gew.-% liegt. Das Siegelschichtpolymere der Schicht A kann zur Verbesserung der Siegelfähigkeit, der Kratzfestigkeit und Laufsicherheit in schnell-laufenden Verpackungsmaschinen an sich übliche Zusätze wie niedermolekulare Harze, Schlupf-, Gleit- und Antiblockmittel enthalten. Zur Optimierung der sehr unterschiedlichen Anforderungen an die Siegeleigenschaften werden bevorzugt Kombinationen von Copolymer und/oder Terpolymeren mit Polymeren, niedermolekularen Harzen und Polydiorganosiloxanen verwendet. Die Dichte des Siegelschichtpolymeren liegt vorzugsweise in einem Bereich von 0,89 bis 0,96 g/cm³, der Schmelzindex in einem Bereich von 0,1 bis 16 g/10 min und 2,14 bar (DIN 53735) und der Erweichungspunkt im Bereich von 60 bis 180 °C (DIN 1995-44), besonders bevorzugt von 80 bis 140 °C.

Die Schichtstärke einer siegelfähigen Außenschicht A liegt vorzugsweise in einem Bereich von 0,1 bis μm, besonders bevorzugt im Bereich von 1 bis 3 μm.

Wie bereits oben beschrieben, können auf die Schichten noch nachträglich, d. h. nach der Coextrusion noch ein oder beidseitig siegelfähige Schichten, vorzugsweise solche, die eine niedrigere Siegelanspringtemperatur als die Schicht A aufweisen oder die

als kaltsiegelfähige Schichten nur unter Einwirkung von druck bereits siegeln, aufgetragen werden. Diese Siegelschichten, die nach der Herstellung der Folie, vorzugsweise in einem Arbeitsgang bei der Bedruckung der Folien, angetragen werden, können eine Schichtstärke von 0,1 bis 10 µm, bevorzugt zwischen 0,1 bis 5 µm, aufweisen.

Als Hauptkomponente können diese aus Lösungen oder Dispersionen angetragenen heißsiegelfähigen Schichten Acrylate, Ethylen-Vinylacetat-Copolymere oder Ionomere und die kaltsiegelfähigen Schichten Naturkautschuklatex enthalten. Sie können wie das Schichtpolymere A Zusätze wie Gleit-, Schlupf-, Antiblockmittel oder Additive enthalten. Zur Verbesserung der Haftung auf der Folie oder zur Verbesserung des Abriebs können die Schichten mittels eines Haftvermittlers, z. B. auf Polyurethan-Basis, auf der Folie verankert werden. Eine Coronabehandlung der Folie reicht in vielen Fälien bereits zur Verbesserung der Haftung dieser zusätzlichen Siegelschicht(en) aus.

Die mit kaltsiegelfähigen Schichten ausgerüsteten Folien werden auf der Gegenseite vorzugsweise noch mit einem Dehäsivlack beschichtet, d. h. mit einem antiadhäsivem Mittel. Beispiele für geeignete Dehäsivlacke sind Typen auf der Basis von Polyamiden oder vinylhaltigen Siloxanen, die ihrerseits noch vernetzt werden können.

Die wenigstens biaxial gestreckte Folie besitzt bevorzugt eine Gesamtstärke von 10 bis 100 µm, besonders bevorzugt von 15 bis 35 µm, wobei der überwiegende Anteil an der Gesamtstärke durch die Schicht(en) B gebildet wird.

Die erfindungsgemäß durch Coextrusion der Schichten A, B, C, D, C(B, A) und anschließende wenigstens biaxiale Streckung hergestellte Folie besitzt im Vergleich zu einer nicht orientierten, bei hohen Temperaturen oder hoher Luftfeuchtigkeit gestreckten Folie ein ausgezeichnetes Gas- und Aroma- Sperrvermögen sowie gute mechanische Eigenschaften. Sie eignet sich deshalb vorzüglich zur Verpackung von sauerstoffempfindlichen Nahrungs-, Genuß- oder Arzneimitteln.

Durch die Einarbeitung von Pigmente wie z. B. Calciumcarbonat in das Polymere der Schicht B oder erhält man eine opake Folie.

Die zusätzliche Ausstattung der Folie mit niedrigsiegelnden oder kaltsiegelnden Schichten erschließt der Folie weitere Einsatzgebiete, beispielsweise bei der Verpackung von Genußmitteln, die temperaturempfindlich sind.

Die Steuerung der Gasdurchlässigkeit über die Schichtstärke, die Rezepturierung und den Streckgrad sowie die Einstellung eines breiten Siegelbereiches erschließen der Folie auch Anwendungsgebiete auf dem technischen Sektor. Als Beispiel hierfür sei die Ummantelung von Kunststoffrohren für Heizungszwecke und dergl. zwecks Reduzierung der Sauerstoffdurchlässigkeit genannt.

Zur Herstellung der beanspruchten Folien mittels Coextrusion können hintereinandergeflanschte Verteilersysteme mit einer T-Düse gekoppelt werden. Die Auslegung der Verteilersysteme sowie die Zahl der Kanäle der Düse richten sich nach dem gewünschten Verbundaufbau.

Die Herstellung einer siebenschichtigen Folie erfolgt zweckmäßigerweise unter Verwendung einer Dreischichtdüse. Bei einem symmetrischen Aufbau der Folie können hierbei die Schmelzen der Polymeren B, C und D durch den mittleren Kanal und die Schmelzen für die äußeren Siegelschichten A gleichzeitig durch die äußeren Kanäle auf eine Kühlwalze extrudiert werden.

Die Oberflächentemperatur der Kühlwalze liegt vorzugsweise unterhalb Raumtemperatur. Die der Kühlwalze abgewandte Seite der Schmelze kann zur Reduzierung der Kristallinität der Schichten zusätzlich mittels Luftduschen gekühlt werden.

Die Streckung der Folie kann sowohl biaxial simultan als auch biaxial stufenweise erfolgen. Bei der bevorzugten biaxialen stufenweisen Streckung wird zunächst mittels beheizter Walzen längs- und nachfolgend mittels eines Streckrahmens quer gestreckt und anschließend thermofixiert. Die Strecktemperaturen liegen in dem für Polypropylenfolien üblichen Bereich. Die Längsstrecktemperatur liegt zweckmäßigerweise in einem Bereich von 80 bis 150 °C, vorzugsweise bei 110 bis 130 °C, die Querstrecktemperatur (Lufttemperatur des Querstreckrahmens) vorteilhaft in einem Bereich von 100 bis 170 °C, bevorzugt bei 110 bis 130 °C.

Die Längs- und Querstreckverhältnisse liegen gewöhnlich zwischen 2 und 6, bevorzugt zwischen 3 und 5 für das Längsstreckverhältnis und zwischen 3 bis 12, vorzugsweise zwischen 6 bis 10 für das Querstreckverhältnis.

Zur Optimierung der mechanischen Eigenschaften und der Sauerstoffbarriere kann entweder die Längsstreckung in zwei Schritten erfolgen oder sich der Längs- und Querstreckung der Folie vor der Thermofixierung eine zusätzliche Nachlängsstreckung anschließen.

Der Streckung schließt sich eine Wärmebehandlung im fixierten oder entspannten Zustand in einem Temperaturbereich von 100 bis 180 °C, vorzugsweise von 140 bis 175 °C an. Diese Wärmebehandlung wird auch als Thermofixierung bezeichnet.

Das nachfolgend angeführte Beispiel soll die Erfindung erläutern ohne sie einzuschränken. Alle Messuen der Sauerstoffdurchlässigkeiten erfolgen mit dem Oxtran® 100-Gerät der Matern Controls Inc.

Beispiel

Eine beidseitig siegelfähige Folie mit einem Ethylen-Propylen-Copolymeren mit einem Ethylengehalt von 4,1 %, einem MFI von 22,4 g/10 min bei 230 °C/5 kp/cm² und einem Schmelzpunkt von 143 °C für die Schicht A, einer Mischung aus einem Polypropylen mit einem MFI von 9 g/10 min bei 230 °C/5 kp/cm² sowie einem Schmelzpunkt von 162 °C und 20 Gew.% eines Terpenharzes mit einem Schmelzpunkt von 125 °C für die Schicht B, einem mit einem Carbonsäureanhydrid modifizierten Polypropylen mit einem MFI von 10 g/10 min, einer Dichte von 0,89 g/cm³ und einem Schmelzpunkt von 153 °C für die Schicht C sowie einem Gemisch eines Ethylen-Vinylalkohol-Copolymeren mit einem Ethylengehalt von 29 Mol.-%, einem Verseifungsgrad von 99,9 Mol-% sowie einem Schmelzpunkt von 188 °C und 20 Gew.-% eines Copolyamids mit einem Schmelzpunkt von 196 °C und einer Dichte von 1,14 g/cm³ für die Schicht D wurde durch Coextrusion hergestellt. Die Schmelze wurde aus einer Breitschlitzdüse von 280 mm Breite und einer Spaltweite von 1,8 mm und einer Düsentemperatur von 230 °C auf eine Kühlwalze mit einer Oberflächentemperatur von 10 °C extrudiert und mittels eines Saugkastens und Pinning (elektrische Drahtentladung) an die Kühlwalze angelegt. Die Abzugspeschwindigkeit der Kühlwalze betrug 4,6 m/min.

Die erhaltene Folie wurde mittels Walzen bei einer Temperatur von 135 °C um das 4,4fache längs- und mittels eines Spannrahmens bei 120 °C um das 6fache quergestreckt und bei 160 °C Lufttemperatur im fixierten Zustand wärmebehandelt.

Die orientierte klare Folie hatte eine Stärke von 28 µm, eine Sperrschicht von 0,8 µm und eine Sauerstoffdurchlässigkeit von 12,5 cm³/m² · d · bar bei 93 % r.F.

**Patentansprüche**

1. Mehrschichtige, dimensionsstabile, siegelfähige Folie, bestehend aus einer oder mehreren inneren Schichten, umfassend eine innere Sperrschicht D auf Basis von verseiftem Ethylen-Vinylacetat-Copolymerisat, das 15 bis 60 Mol-% Ethyleneinheiten enthält und zu wenigstens 90 Mol-% verseift ist, und jeweils einer an die Oberflächen der Sperrschicht D unmittelbar angrenzenden Schicht, die jeweils als haftvermittelnde Schicht C aus einem modifizierten Polyolefin oder einem partiell verseiften Ethylen-Vinylacetat-Copolymeren mit niedrigem Verseifungsgrad besteht oder diese Komponenten in einer Mischung enthält, dadurch gekennzeichnet, daß die Sperrschicht D zur Verbesserung ihrer Verstreckbarkeit zusätzlich monomere, oligomere oder polymere Substanzen enthält, daß sich auf einer Seite der Sperrschicht D, auf der ersten haftvermittelnden Schicht C eine erste Schicht B befindet und darauf eine siegelfähige Schicht A, wobei die Schicht B Propylen-Homopolymerisat und/oder -Copolymerisat und/oder das Material der Schicht C und/oder das Material der Schicht A enthält, und daß die Schichten B bis D und A der Folie gleichzeitig mindestens biaxial orientiert und thermofixiert sind und gleiche Streckverhältnisse aufweisen.

2. Folie nach Anspruch 1, dadurch gekennzeichnet, daß die erste Schicht B mit der Außenschicht A und/oder mit der ersten Schicht C zu einer Schicht vereinigt ist, die aus einem Gemisch der Polymeren der ersten Schicht B mit den Polymeren der Schicht A und/oder mit den Polymeren der ersten Schicht C besteht.

3. Folie nach Anspruch 1, dadurch gekennzeichnet, daß die erste Schicht B mit der Schicht A und-/oder der ersten Schicht C zu einer Schicht vereinigt ist, die aus den Polymeren der Schicht A und/oder aus den Polymeren der Schicht C besteht.

4. Folie nach einem der Ansprüche 1 bis 3, dadurch gekennzeichnet, daß auf der gegenüberliegenden Seite der Sperrschicht D und auf der angrenzenden, zweiten haftvermittelnden Schicht C eine zweite Schicht B und auf der zweiten Schicht B gegebenenfalls eine siegelfähige Außenschicht A vorhanden ist.

5. Folie nach Anspruch 4, dadurch gekennzeichnet, daß die zweite Schicht B mit der gegebenenfalls vorhandenen angrenzenden Schicht A und/oder mit der angrenzenden, zweiten Schicht C zu einer Schicht vereinigt ist, die aus einem Gemisch der Polymeren der Schicht B mit den Polymeren der Schicht A und/oder mit den Polymeren der Schicht C besteht.

6. Folie nach einem der Ansprüche 1 bis 3, dadurch gekennzeichnet, daß auf der gegenüberliegenden Seite der Sperrschicht D und unmittelbar auf der angrenzenden, zweiten haftvermittelnden Schicht C gegebenenfalls eine weitere siegelfähige Außenschicht A vorhanden ist.

7. Folie nach einem der Ansprüche 1 bis 6, dadurch gekennzeichnet, daß die Sperrschicht D aus einer Mischung eines Ethylen-Vinylalkohol-Copolymeren mit 0,5 bis 50 Gew.-% eines carbonylhaltigen Polymeren, vorzugsweise eines Polyamids oder Copolyamids, besteht.

8. Folie nach Anspruch 7, dadurch gekennzeichnet, daß das Copolyamid einen Schmelzpunkt von kleiner als 210 °C aufweist.

9. Folie nach einem der Ansprüche 1 bis 8, dadurch gekennzeichnet, daß die Sperrschicht D aus einer Mischung mit hydroxylgruppenhaltigen Oligomeren oder Polymeren, insbesondere Neopentylglykol, besteht.

10. Folie nach einem der Ansprüche 1 bis 9, dadurch gekennzeichnet, daß das modifizierte Polyolefin der Haftvermittlerschicht C ein Pfropfpolymerisat ist, das gegebenenfalls in einer Mischung mit einem oder mehreren thermoplastischen Polymeren vorliegt.

11. Folie nach einem der Ansprüche 1 bis 10, dadurch gekennzeichnet, daß die Schicht B niedrigmolekulare, mischbare Harze umfaßt.

12. Folie nach einem der Ansprüche 1 bis 11, dadurch gekennzeichnet, daß die Schicht B fein verteilte, feste, insbesondere anorganische, Teilchen vorzugsweise in der Größe von 0,2 bis 20 µm und der Menge von 1 bis 25 Gew.-% umfaßt.

13. Folie nach einem der Ansprüche 1 bis 12, dadurch gekennzeichnet, daß die gegebenenfalls vorhandene Schicht A aus einem Homo- oder Copolymerisat eines α-Olefins, oder aus einem Terpolymeren der Zusammensetzung $C_2/C_3/C_n$ mit n = 4 bis 10 oder aus einer Mischung verschiedener Polyolefine oder aus Ionomeren oder Mischungen von Ionomer mit anderen Polyolefinen besteht.

14. Folie nach einem der Ansprüche 1 bis 13, dadurch gekennzeichnet, daß die gegebenenfalls vorhandene(n) Schicht(en) A ein weiteres thermoplastisches Polymeres enthält (enthalten).

15. Folie nach einem der Ansprüche 1 bis 14, dadurch gekennzeichnet, daß die gegebenenfalls vorhandene(n) Schicht(en) A Additive wie Schlupf-, Gleit- und Antiblockmittel sowie Antistatika enthält (enthalten).

16. Folie nach einem der Ansprüche 1 bis 15, dadurch gekennzeichnet, daß sie auf wenigstens einer Oberfläche eine partiell oder vollflächig aufgedruckte weitere Schicht aufweist, die gegebenenfalls über einen Haftvermittler auf der Folienoberfläche verankert ist, wobei diese aufgedruckte Schicht, vorzugsweise bei Temperaturen unter 100 °C, gegen sich selbst und andere siegelfähige Schichten auf Basis von Polyolefin siegelbar ist.

17. Folie nach Anspruch 16, dadurch gekennzeichnet, daß die aufgedruckte Schicht als Hauptkomponente ein Ethylen-Vinylacetat-Copolymeres enthält.

18. Folie nach Anspruch 16 oder 17, dadurch gekennzeichnet, daß die aufgedruckte Schicht unter Einwirkung von Druck gegen sich selbst siegelbar ist und vorzugsweise Naturkautschuk umfaßt.

19. Folie nach Anspruch 16, dadurch gekennzeichnet, daß die aufdruckte Schicht auf der in Anspruch 4 gennanten, auf der gegenüberliegenden Seite der Sperrschicht D vorhandenen, zweiten haftvermittelnden Schicht C oder der zweiten Schicht B vorhanden ist.

20. Folie nach einem der Ansprüche 1 bis 19, dadurch gekennzeichnet, daß die Sperrschicht D aus zwei oder mehreren übereinanderliegenden Einzelschichten besteht, wobei zwischen diesen Einzelschichten haftvermittelnde Schichten vorhanden sind.

21. Verfahren zur Herstellung der Folie nach einem der Ansprüche 1 bis 20, dadurch gekennzeichnet, daß man die Schmelze des die Sperrschicht bildenden Polymeren bzw. Polymerblends und die Schmelzen der übrigen, am Verbundaufbau beteiligten Polymeren gemeinsam und gleichzeitig durch eine Flachdüse extrudiert, die erhaltene Flachfolie abkühlt, durch gleichzeitiges oder nacheinander erfolgendes Strecken in Längs- und Querrichtung orientiert und thermofixiert.

22. Verfahren nach Anspruch 21, dadurch gekennzeichnet, daß das Strecken innerhalb eines Temperaturbereiches von 100 bis 170 °C durchgeführt wird.

23. Verfahren nach Anspruch 21 oder 22, dadurch gekennzeichnet, daß sich dem Strecken eine Wärmebenandlung bei einer Temperatur zwischen 100 °C und einer Temperatur, die unterhalb des Schmelzpunktes des Materials des Schicht D oder, falls vorhanden, der Schicht B liegt, anschließt.

24. Verfahren nach einem der Ansprüche 21 bis 23, dadurch gekennzeichnet; daß die Folie nach der Streckung in Längs- und Querrichtung und vor der Thermofixierung einer Streckung in Längsrichtung unterworfen wird.

25. Verfahren nach einem der Ansprüche 21 bis 24, dadurch gekennzeichnet, daß auf die biaxial oder multiaxial gestreckte und thermofixierte Folie wenigstens einseitig eine Siegelschicht aus einer Lösung oder Dispersion aufgebracht wird.

26. Verfahren nach Anspruch 25, dadurch gekennzeichnet, daß die Siegelschicht auf der biaxial oder multiaxial gestreckten und thermofixierten Folie mittels eines Haftvermittlers verankert wird.

27. Verwendung der Folie nach einem der Ansprüche 1 bis 20 als Verpackungsfolie, insbesondere zur Verpackung sauerstoffempfindlicher Güter.

**Claims**

1. A multilayered, dimensionally stable, sealable film which comprises one or several inner layers comprising an inner barrier layer D based on a saponified ethylene/vinyl acetate copolymer which contains 15 to 60 mole % of ethylene units and is saponified to at least 90 %, and layers which are immediately adjacent to each of the two surfaces of said barrier layer D, said adjacent layers being adhesion-promoting layers C consisting of a modified polyolefin or a partially saponified ethylene/vinyl acetate copolymer having a low degree of saponification or containing a mixture of these components, said multilayered film being characterized in that monomeric, oligomeric or polymeric substances are additionally contained in said barrier layer D to improve its stretchability, that on one surface of the barrier layer D there is applied a first layer B on top of the first adhesion-promoting layer C and a sealable layer A is applied on top of said layer B, said layer B comprising a homopolymer and/or copolymer of propylene and/or the material of said layer C and/or the material of said layer A, and in that said layers B to D and A of said film are at the same time oriented at least biaxially and heat-set and have identical stretching ratios.

2. The film as claimed in claim 1, wherein said first layer B and said outer layer A and/or said first layer C comprise a single layer comprised of a blend of the polymers of said first layer B and the polymers of said layer A and/or the polymers of said first layer C.

3. The film as claimed in claim 1, wherein said first layer B and said layer A and/or said first layer C comprise a single layer comprised of the polymers of said layer A and/or the polymers of said layer C.

4. The film as claimed in any of claims 1 to 3, wherein a second layer B is present on the opposite surface of said barrier layer D and on said adjacent second adhesion-promoting layer C, and another sealable outer layer A is optionally present on said second layer B.

5. The film as claimed in claim 4 wherein said second layer a and said optionally present adjacent layer A and/or said adjacent second layer C comprise a single layer comprised of a mixture of the polymers of said layer B and of the polymers of said layer A and/or of the polymers of said layer C.

6. The film as claimed in any of claims 1 to 3, wherein another sealable outer layer A is optionally present on the opposite surface of said barrier layer D and is applied directly onto said adjacent second adhesion-promoting layer C.

7. The film as claimed in any of claims 1 to 6, wherein said barrier layer D comprises a mixture of an ethylene-vinyl alcohol copolymer and about 0.5 to about 50 % by weight of a carbonyl-containing polymer, preferably a polyamide or copolyamide.

8. This film as claimed in claim 7, wherein said copolyamide has a melting point of less than 210°C.

9. The film as claimed in any of claims 1 to 8, wherein said barrier layer D is comprised of a mixture including hydroxyl-group-containing oligomers or polymers, in particular neopentyl glycol.

10. The film as claimed in any of claims 1 to 9, wherein the modified polyolefin of said adhesion-promoting layer C is a graft polymer which is optionally present in admixture with one or several thermoplastic polymers.

11. The film as claimed in any of claims 1 to 10, wherein said layer D comprises low-molecular, miscible resins.

12. The film as claimed in any of claims 1 to 11, wherein said layer B comprises finely distributed, solid, particularly inorganic, particles which preferably have a size of 0.2 to 20 µm and are present in an amount of 1 to 25 % by weight.

13. The film as claimed in any of claims 1 to 12, wherein said optionally present layer A comprises a homo- or copolymer of an $\alpha$-olefin; or a terpolymer composed of $C_2/C_3/C_n$ units, with n denoting 4 to 10; or a mixture of different polyolefins; or ionomers; or mixtures of ionomers and other polyolefins.

14. The film as claimed in any of claims 1 to 13, wherein said optionally present layer(s) A include(s) a further thermoplastic polymer.

15. The film as claimed in any of claims 1 to 14, wherein said optionally present layer(s) A include(s) additives, such as slip agents, lubricants, antiblocking agents or antistatic agents.

16. The film as claimed in any of claims 1 to 5, wherein a further layer is applied by pressure to at least a portion of at least one outer surface of said film, said layer applied by pressure being bonded to the outer surface of said film optionally by means of an adhesion-promoting agent and being sealable to itself and to other sealable layers on a basis of polyolefin, preferably at temperatures of less than 100°C.

17. The film as claimed in claim 16, wherein said layer applied by pressure comprises an ethylene/vinyl acetate copolymer as its principal component.

18. The film as claimed in claim 16 or 17, wherein said layer applied by pressure is pressure-sealable to itself and preferably comprises natural rubber.

19. The film as claimed in claim 16, wherein the layer applied by pressure is present on said second adhesion-promoting layer C or said second layer B, which are applied to the opposite surface of said barrier layer D, as claimed in claim 4.

20. The film as claimed in any of claims 1 to 19, wherein said barrier layer D comprises two or more super-imposed individual layers, with adhesion-promoting layers being applied between said individual layers.

21. A process for manufacturing the film as claimed in any of claims 1 to 20, wherein the melt of the polymer or polymer blend forming the barrier layer and the melts of the other polymers required to form the composite material are extruded jointly and simultaneously through a slot die, the resulting flat sheet material is cooled down, oriented by simultaneous or subsequent stretching in the longitudinal and transverse directions, and heat set.

22. The process as claimed in claim 21, wherein stretching is performed within a temperature range of 100°C to 170°C.

23. The process as claimed in claim 21 or 22, wherein the stretching step is followed by a heat-treatment performed at a temperature between 100°C and a temperature below the melting point of the material forming said layer D and, if present, said layer B.

24. The process as claimed in any of claims 21 to 23, wherein, following the stretching step in the longitudinal and transverse directions and prior to the heat-setting step, the film is subjected to a stretching step in the longitudinal direction.

25. The process as claimed in any of claims 21 to 24, wherein a sealing layer is applied from a solution or dispersion to at least one surface of said biaxially or multiaxially stretched and heat-set film.

26. The process as claimed in claim 25, wherein said sealing layer is anchored on said biaxially or multiaxially stretched and heat-set film by means of an adhesion-promoting agent.

27. Use of the film as claimed in any of claims 1 to 20 as a packaging film, especially for goods which are sensitive to oxygen.

## Revendications

1. Feuille multicouche, à stabilité dimensionelle, soudable, constituée d'une ou plusieurs couches internes, comprenant une couche interne d'arrêt D à base d'un copolymère éthylène/acétate de vinyle saponifié, qui contient 15 à 60 % en mole de motifs éthylène et qui est saponifié à au moins 90 % en mole, et une couche immédiatement contiguë à chacune des faces de la couche d'arrêt D, qui est constituée, en tant que chaque couche adhésive C, d'une polyoléfine modifiée ou d'un copolymère éthylène/acétate vinylique partiellement saponifié, à faible degré de saponification, ou contient ces composants en un mélange, caractérisé en ce que la couche d'arrêt D contient, en outre, des substances monomériques, oligomériques ou polymériques pour améliorer son étirabilité, que, sur un côté de la couche d'arrêt D, une première couche B se trouve sur la première couche adhésive C, et sur cette couche B se trouve une couche soudable A, la couche B contenant un homopolymère et/ou un copolymère polypropylène et/ou le matériau de la couche C et/ou le matériau de la couche A, et en ce que les couches B à D et A de la feuille sont orientées simultanément au moins biaxialement et thermofixées, et présentent les mêmes rapports d'étirage.

2. Feuille selon la revendication 1, caractérisée en ce que la première couche B est réunie avec la couche externe A et/ou avec la première couche C pour former une seule couche qui est constituée d'un mélange des polymères de la première couche B et des polymères de la couche A et/ou des polymères de la première couche C.

3. Feuille selon la revendication 1, caractérisée en ce que la première couche B est réunie avec la couche A et/ou la première couche C, pour former une seule couche qui est constituée des polymères de la couche A et/ou des polymères de la couche C.

4. Feuille selon l'une des revendications 1 à 3, caractérisée en ce que, sur le côté opposé de la couche d'arrêt D et sur la deuxième couche adhésive contiguë C, est présente une deuxième couche B, et sur la deuxième couche B se trouve éventuellement une autre couche externe soudable A.

5. Feuille selon la revendication 4, caractérisée en ce que la deuxième couche B est réunie avec la couche A contiguë, éventuellement présente, et/ou avec la deuxième couche contiguë C, pour former une seule couche qui est constituée d'un mélange des polymères de la couche B et des polymères de la couche A et/ou des polymères de la couche C.

6. Feuille selon l'une des revendications 1 à 3, caractérisée en ce que, sur le côté opposé de la couche d'arrêt D et immédiatement sur la deuxième couche adhésive contiguë C, est éventuellement présente une autre couche externe soudable A.

7. Feuille selon l'une des revendications 1 à 6, caractérisée en ce que la couche d'arrêt D est constituée d'un mélange d'un copolymère éthylène/alcool vinylique et de 0,5 à 50 % en poids d'un polymère contenant des groupes carbonyle, de préférence un polyamide ou copolyamide.

8. Feuille selon la revendication 7, caractérisée en ce que le copolyamide présente un point de fusion inférieur à 210°C.

9. Feuille selon l'une des revendications 1 à 8, caractérisée en ce que la couche d'arrêt D est constituée d'un mélange comprenant des oligomères ou polymères à groupes hydroxy, néopentylglycol en particulier.

10. Feuille selon l'une des revendications 1 à 9, caractérisée en ce que la polyoléfine modifiée de la couche adhésive C est un polymère greffé qui se trouve éventuellement en un mélange avec un ou plusieurs polymères thermoplastiques.

11. Feuille selon l'une des revendications 1 à 10, caractérisée en ce que la couche B comprend des résines miscibles, à faible poids moléculaire.

12. Feuille selon l'une des revendications 1 à 11, caractérisée en ce que la couche B comprend des particules solides finement divisées, en particulier minérales, ayant de préférence une taille de 0,2 à 20 µm, et de préférence en une quantité de 1 à 25 % en poids.

13. Feuille selon l'une des revendications 1 à 12, caractérisée en ce que la couche A éventuellement présente est constituée d'un homo- ou copolymère d'une $\alpha$-oléfine ou d'un terpolymère de composition $C_2/C_3/C_n$, avec n= 4 à 10, ou d'un mélange de diverses polyoléfines ou d'ionomères ou de mélange d'ionomères avec d'autres polyoléfines.

14. Feuille selon l'une des revendications 1 à 13, caractérisée en ce que la ou les couches A éventuellement présente(s) contient (contiennent) un autre polymère thermoplastique.

15. Feuille selon l'une des revendications 1 à 14, caractérisée en ce que la ou les couches A éventuellement présente(s) contient (contiennent) des additifs tels qu'agents de glissement, lubrifiants et antiblocants, ainsi que des antistatiques.

16. Feuille selon l'une des revendications 1 à 15, caractérisée en ce qu'elle présente sur au moins une face une autre couche recouvrant partiellement ou totalement la ou les faces de la feuille et étant appliquée par pression, et qui est éventuellement fixée sur la surface de la feuille par l'intermédiaire d'un adhésif, la couche appliquée par pression étant soudable, de préférence à des températures inférieures à 100°C, avec elle-même ou avec d'autres couches soudables à base de polyoléfine.

17. Feuille selon la revendication 16, caractérisée en ce que la couche appliquée par pression contient en tant que composant principal un copolymère éthylène/acétate de vinyle.

18. Feuille selon la revendication 16 ou 17, caractérisée en ce que la couche appliquée par pression est soudable avec elle-même sous l'effet d'une pression et comprend de préférence du caoutchouc naturel.

19. Feuille selon la revendication 16, caractérisée en ce que la couche appliquée par pression est présente sur la deuxième couche adhésive C, mentionnée dans la revendication 4, située sur le côté opposé de la couche d'arrêt D, ou est présente sur la deuxième couche B.

20. Feuille selon l'une des revendications 1 à 19, caractérisée en ce que la couche d'arrêt D est constituée de 2 ou plusieurs couches individuelles successives, des couches adhésives étant présente entre ces couches individuelles.

21. Procédé pour la fabrication de la feuille selon l'une des revendications 1 à 20, caractérisée en ce que la masse fondue du polymère ou mélange de polymères constituant la couche d'arrêt, et les masses fondues des autres polymères participant à la structure stratifiée, sont extrudées conjointement et simultanément à travers une filière plate, la feuille obtenue à plat est refroidie, orientée dans le sens longitudinal et dans le sens transversal'par étirage effectué simultanément ou successivement, et thermofixée.

22. Procédé selon la revendication 21, caractérisé en ce que l'étirage est effectué dans un intervalle de température allant de 100 à 170°C.

23. Procédé selon la revendication 21 ou 22, caractérisé en ce qu'à l'étirage fait suite un traitement thermique à une température comprise entre 100°C et une température qui est inférieure au point de fusion du matériau de la couche D ou de la couche B, si cette dernière est présente.

24. Procédé selon l'une des revendications 21 à 23, caractérisé en ce que la feuille est soumise à un étirage dans le sens longitudinal après l'étirage dans le sens longitudinal et dans le sens transversal, et avant le thermofixage.

25. Procédé selon l'une des revendications 21 à 24, caractérisé en ce que, sur la feuille étirée biaxialement ou multiaxialement et thermofixée, est appliquée au moins d'un côté une couche de soudage provenant d'une solution ou d'une dispersion.

26. Procédé selon la revendication 25, caractérisé en ce que la couche de soudage est fixée au moyen d'un adhésif sur la feuille étirée biaxialement ou multiaxialement et thermofixée.

27. Utilisation de la feuille selon l'une des revendications 1 à 20, en tant que feuille d'emballage, en particulier pour le conditionnement de produits sensibles à l'oxygène.